# EUROPÄISCHE PATENTANMELDUNG

(11) **EP 2 286 995 A1**
(43) Veröffentlichungstag der Anmeldung: **23.02.2011**
(21) Anmeldenummer: 09008380.9
(22) Anmeldetag: 26.06.2009
(51) Int. Cl.: B32B 37/06, B32B 37/00

(54) **Verfahren und Vorrichtung zum Aufbringen einer Abdeckung auf eine Karte**

(71) Anmelder: Atlantic Zeiser GmbH, 78576 Emmingen (DE)
(72) Erfinder: Moog, Nils, 33178 Borchen (DE); Jantos, Heinrich, 33154 Salzkotten (DE); Seemann, Volker, 33102 Paderborn (DE)
(74) Vertreter: Ullrich & Naumann

(57) **Zusammenfassung**

Eine Vorrichtung zum Aufbringen einer Abdeckung (114) auf zumindest einem Abschnitt einer Oberfläche einer Karte (K) und Verwendung eines Haftmittels (116) umfasst eine Wärmestrahlungseinheit (120), die konfiguriert ist, um das Haftmittel (116) zum Erwärmen desselben mit einer Wärmestrahlung (128) zu beaufschlagen. Ferner ist eine Andruckeinheit (102) vorgesehen, die konfiguriert ist, um die Abdeckung (114) und die Karte (K) durch Druckbeaufschlagung und unter Verwendung des erwärmten Haftmittels (116) miteinander zu verbinden. Die Wärmestrahlungseinheit (120, 140) ist außerhalb der Andruckeinheit (102) angeordnet. Ferner wird ein Verfahren zum Aufbringen einer Abdeckung auf zumindest einen Abschnitt einer Oberfläche einer Karte unter Verwendung eines Haftmittels beschrieben.

## Beschreibung

Die vorliegende Erfindung betrifft eine Vorrichtung und ein Verfahren zum Aufbringen einer Abdeckung auf zumindest einen Abschnitt einer Oberfläche einer Karte unter Verwendung eines Haftmittels. Insbesondere bezieht sich die Erfindung auf ein Verfahren und eine Vorrichtung zum Aufbringen von Schutzfolien auf Datenträgerkarten, z.B. Kunststoffkarten.

Datenträgerkarten, wie z.B. Ausweise (z.B. Personalausweise), Kreditkarten, Bankkarten oder Kundenkarten, werden zunehmend häufiger mit farbigen Bedruckungen und Beschriftungen versehen bzw. personalisiert, z.B. durch Aufbringen eines Passfotos, eines Logos oder Ähnlichem. Ein für Kunststoffkarten gängiges Verfahren ist der Thermosublimationsdruck, bei dem mittels Druck und Wärme Farbpartikel von einem Farbband abgelöst und auf die Plastikkarte aufgebracht werden. Dabei werden die drei Komplementärfarben Gelb, Rot und Blau in dieser Reihenfolge nacheinander aus Farbschichten gedruckt, wobei zuerst das elektronisch vorliegende und zu druckende Originalbild mit einer speziellen Software in die Komplementärfarben aufgelöst und die erzeugten Daten anschließend der Druckwerteinheit zugeführt werden. In dieser werden die Druckbilder pro Komplementärfarbe mit einem Thermodruckkopf zeilenweise gedruckt. Die Druckköpfe haben Druckzellen mit typischen Auflösungen zwischen 200 bis 500 dpi (dots per inch = Punkte pro Inch = Punkte pro 2,54 cm). Aufgrund der individuellen Ansteuerung und individuellen Beheizungen, beispielsweise durch elektrische Beheizung, können somit pro Pixel verschiedene Farbintensitätsstufen erzeugt werden.

Die so erzeugten Drucke sind jedoch gegenüber mechanischer Belastung und auch gegenüber Strahlungsbelastung, beispielsweise UV-Strahlung, anfällig, so dass es erforderlich ist, eine Schutzschicht vorzusehen, um den Druck resistenter zu machen. Hierzu werden beispielsweise sogenannte Overlays verwendet, welche eine Art Firnis darstellen und ebenfalls mit einem Druckkopf auf die oben beschriebene Art und Weise als eine aufschmelzende Schicht vollflächig oder nur teilweise, z.B. nur über dem Bild oder dem Logo, auf die Karte aufgebracht werden. Eine bekannte Alternative zu diesem Ansatz, der eine wesentlich stabilere Schutzschicht liefert, besteht in der Verwendung eines Laminats, wobei dieses als Folie ausgeführt ist und zur Verklebung mit dem Kartenkörper mit einer Klebeschicht versehen ist. Üblicherweise werden Schmelzgeber verwendet, die unter Wärmeeinwirkung zwischen 80°C und 200°C schmelzen und durch eine Kombination von Adhäsion im flüssigen Zustand (flächige Benetzung der Kartenoberfläche) und eine Kohäsion bei der anschließenden Abkühlung eine dauerhafte Verbindung der eigentlichen Schutzfolie mit dem Kartenkörper ermöglichen. Diese Schutzfolien haben Dicken, die typischerweise im Bereich von 12,7 µm bis zu 38 µm liegen. Die Schutzfolien sind meist auf die Kartengeometrie als sogenannte Patches zugeschnitten, welche auch Aussparungen aufweisen können, z.B. für Chipkontaktflächen. Alternativ können diese Schutzfolien Abmessungen aufweisen, die lediglich eine teilweise Abdeckung einer Kartenoberfläche zulassen. Zur maschinellen Verarbeitung sind diese Patches auf einer Trägerfolie in Rollenform aufgebracht, von der sie sich beim Auflaminieren auf die Karten ablösen. Diese auch als Patch-Laminate bezeichneten Schutzfolien verleihen den auf den Karten aufgebrachten Drucken einen dauerhaften Schutz. Die Overlayfolien oder Laminate können zusätzlich mit Hologrammen oder ähnlichen Sicherheitsmerkmalen versehen werden, die beispielsweise bei der Herstellung derselben eingebracht werden, wodurch eine Fälschungssicherheit der Karte erhöht wird.

Ein Beispiel für das Aufbringen einer Folie auf einen Träger ist in der WO 2007/076738 A2 beschrieben. Diese Veröffentlichung beschreibt ein Verfahren zum Aufbringen einer Folie auf einer Kunststoffkarte, wobei der Träger irreversibel mit der Folie zumindest partiell überzogen wird. Nach dem Bereitstellen des Trägers wird entweder der Träger oder die Folie mit einer dünnen Schicht eines transparenten, unter Einwirkung elektromagnetischer Wellen aushärtenden Haftvermittlers beschichtet oder es wird eine dünne Schicht aus einem solchen Material bereitgestellt. Anschließend werden Träger und Folie mit dem Haftvermittler dazwischen zusammengebracht und verpresst, wobei anschließend ein Aushärten des Haftmittels unter Lichteinwirkung durchgeführt wird.

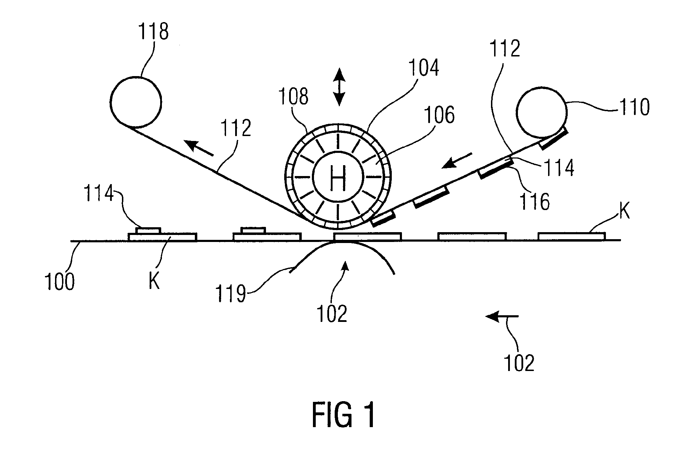

Anstelle eines durch elektromagnetische Strahlung aushärtenden Klebers oder Haftvermittlers kann eine Laminierung durch Anwenden von Druck und Wärme erfolgen. Bei der Personalisierung von Kunststoffkarten werden beispielsweise kleinere Laminiereinheiten eingesetzt, bei denen die Patch-Laminate mit beheizten Leisten und mit Anpressdruck im Durchlauf auf die Karten aufgebracht werden. Die Fig. 1 zeigt eine schematische Darstellung einer solchen, herkömmlichen Laminiereinheit. Die Einheit umfasst eine Transporteinrichtung 100, mittels der Karten K, die auf dieser Transporteinheit 100 angeordnet sind, entlang des Pfeils 102 transportiert werden. Die Transporteinheit 100 führt die einzelnen Karten K an einer Andruckeinheit vorbei, die in ihrer Gesamtheit mit dem Bezugszeichen 102 bezeichnet ist. Die Andruckeinheit 102 umfasst eine vertikal verschiebbar gelagerte Andruckrolle 104. Die Andruckeinheit 104 besteht aus einem hohlen Aluminiumzylinder 106, auf dessen äußere Oberfläche eine Silikonbeschichtung 108 angeordnet ist. Innerhalb des Hohlraums der Aluminiumwalze 108 ist eine Heizpatrone H angeordnet, die ein Aufheizen der Andruckrolle 104 bewirkt. Die in Fig. 1 gezeigte Laminiereinheit umfasst ferner eine Laminatfolienspule 110, von der aus eine Laminatfolie in Richtung der Andruckrolle 104 bereitgestellt wird. Die Laminatfolie umfasst als Trägersubstrat ein Folienmaterial 112, auf dem in vorbestimmten Abständen jeweils Abdeckungen bzw. Patch-Laminate 114 angeordnet sind. Die Patch-Laminate 114 sind auf der der Folie 112 abgewandten Oberfläche mit einem Haftmittel, beispielsweise einem Schmelzkleber 116 versehen. Die Karten K und die Abdeckungen 114 werden synchron zueinander bewegt, so dass diese die Andruckeinheit 102 gemeinsam erreichen, so dass entweder die gesamte Oberfläche der Karte K oder, wie in Fig. 1 gezeigt ist, ein Teil der Oberfläche der Karte K, der der Transporteinheit 100 abgewandt ist, mit der Abdeckung 114 versehen wird. Ein Bereich der Andruckrolle bzw. -walze104 wird der Schmelzkleber 116 aufgrund der erwärmten Andruckrolle 104 verflüssigt und die Abdeckung 114 wird unter Verwendung eines Anpressdrucks, der durch die Andruckrolle 104 angelegt wird, auf die Oberfläche der Karte K aufgeklebt. Es verbleibt die Folie 112, die durch eine Leergutspule 118 aufgenommen wird. Die Andruckrolle 102 ist vertikal bewegbar, um den für die Verbindung zwischen Karte K und Patch-Laminat 114 erforderlichen Anpressdruck einstellen zu können. Die Andruckeinheit 102 kann zusätzlich eine Gegenrolle oder Gegenwalze 119 aufweisen, wie in Fig. 1 schematisch gezeigt ist, so dass zwischen den Rollen 104 und 119 abhängig von der vertikalen Position der Anpressrolle 104 der erforderliche Druck eingestellt wird.

Die in Fig. 1 gezeigte, herkömmliche Laminiereinheit ist nachteilig, da die Andruckwalzen 104 und 119 bzw. zumindest eine dieser Andruckwalzen gleichmäßig und konstant erwärmt werden müssen. Ferner muss die aufgenommen Energie auch möglichst gleichmäßig wieder an das Laminat und an die Karte abgegeben werden, um eine dauerhafte Verklebung zu erzielen. Beispielsweise sind die Andruckwalzen 104 und gegebenenfalls auch die Andruckwalze 119 zu diesem Zweck intern mit einer oder mehreren elektrischen Heizpatronen H bestückt, wobei für einen gleichmäßigen Energiefluss eine dynamische Regelung erforderlich ist. Diese dynamische Regelung bewirkt anfänglich eine starke Heizleistung, um die Walze auf die erforderliche Temperatur zu bringen, wobei die Heizleistung bei Erreichen oder bei einer vorbestimmten Temperatur unterhalb der erforderlichen Temperatur reduziert wird, um ein Überheizen zu vermeiden. Während des weiteren Prozesses wird die Heizleistung wiederholt erhöht und reduziert, um die Temperatur der Walze innerhalb eines erforderlichen Temperaturbereichs zu halten.

Aus Gründen des gleichmäßigen Andrucks des Laminats auf die Karte, zur Verhinderung von Beschädigungen derselben und zum Ausgleich kleinerer Unebenheiten sind die Andruckwalzen 104 und 119 typischerweise mit dem elastischen, hitzebeständigen Bezug 108 versehen, z.B. aus Silikon, der aber nur wenig wärmeleitfähig ist und damit einer dynamischen Regelung abträglich ist. Hinzu kommt, dass bei den erforderlichen Prozesstemperaturen sowohl die Lager der Rolle 104 als auch den Rollenbezug 108 einem hohen Verschleiß unterliegen und entsprechend oft ersetzt werden müssen.

Aufgrund der oben angesprochenen Probleme ergeben sich zwangsläufig geringe Laminiergeschwindigkeiten, welche zwischen 10 mm/s und 50 mm/s liegen und damit Durchsätze von meist nur wenigen 100 Karten pro Stunde ermöglichen. Moderne Personalisierungssysteme erfordern jedoch für einen wirtschaftlichen Betrieb einen Durchsatz, der typischerweise einige 1000 Karten pro Stunde umfasst, wobei während dieses Durchsatzes die Karten optisch und elektronisch personalisiert werden. Folglich sind für so hohe Durchsätze eine große Anzahl der anhand der Fig. 1 beschriebenen Laminiereinheiten parallel vorzusehen, wodurch allein aufgrund der Kosten einer Laminiereinheit die Wirtschaftlichkeit der Gesamtanlage in Frage gestellt ist.

Andere Lösungsansätze schlagen eigenständige Laminiersysteme vor, in denen die fertig prozessierten Karten nacheinander eingebracht und laminiert werden. Typischerweise wird hier die oben erwähnte Heizwalzentechnik verwendet, wobei jedoch aufgrund der höheren Baugröße die erforderlichen Prozesse gleichmäßig und damit den Durchsatz fördernd ablaufen, so dass Durchsätze von einigen hundert bis einigen tausend Karten pro Stunden möglich sind. Diese durchsatzstärkeren Systeme sind jedoch so groß, dass sich ihre direkte Integration in Personalisierungssysteme schwierig gestaltet.

Die Verwendung der Heizpatronen führt dazu, dass aufgrund des Aufbaus der Rolle 104 bestehend aus dem Aluminiumzylinder 106 und der Schutzbezug 108 eine gleichmäßige Wärmeübertragung nur schwer erreichbar ist. Ferner ist das System im Hinblick auf die Wärmeleitung träge und damit nur schwer regelbar. In Ansätzen, bei denen eine Vielzahl von Karten gleichmäßig bearbeitet werden und somit ein kontinuierlicher Betrieb existiert, ist dieses Problem nicht so gravierend, jedoch sind solche Ansätze nur in separaten Anlagen erreichbar, die getrennt von den Personalisierungsvorrichtungen betrieben werden. Für eine Implementierung in eine Personalisierungseinrichtung ist jedoch eine dynamische Regelung erforderlich, da der Laminiereinheit abhängig von den durchzuführenden Personalisierungsschritten die Karten gegebenenfalls unregelmäßig bereitgestellt werden.

Ausgehend von dem oben beschriebenen Stand der Technik liegt der vorliegenden Erfindung die Aufgabe zugrunde, einen verbesserten und energieeffizienten Ansatz zum Aufbringen einer Abdeckung auf zumindest einen Abschnitt einer Oberfläche einer Karte unter Verwendung eines Haftmittels zu schaffen.

Diese Aufgabe wird durch eine Vorrichtung gemäß Anspruch 1 und einem Verfahren gemäß Anspruch 11 gelöst.

Die vorliegende Erfindung schafft eine Vorrichtung zum Aufbringen einer Abdeckung aus zumindest einem Abschnitt einer Oberfläche einer Karte unter Verwendung eines Haftmittels mit:
einer Wärmestrahlungseinheit, die konfiguriert ist, um das Haftmittel zum Erwärmen desselben mit einer Wärmestrahlung zu beaufschlagen; und
einer Andruckeinheit, die konfiguriert ist, um die Abdeckung und die Karte durch Druckbeaufschlagung und unter Verwendung des erwärmten Haftmittels miteinander zu verbinden,
wobei die Wärmestrahlungseinheit außerhalb der Andruckeinheit angeordnet ist.

Die vorliegende Erfindung schafft ferner einen Vorrichtung zur Personalisierung von Karten, die eine Vorrichtung zum Aufbringen einer Abdeckung auf die personalisierten Karten entsprechend den Lehren der vorliegenden Erfindung umfasst.

Die vorliegende Erfindung schafft ferner ein Verfahren zum Aufbringen einer Abdeckung auf zumindest einen Abschnitt einer Oberfläche einer Karte unter Verwendung eines Haftmittels, mit folgenden Schritten:
Beaufschlagen des Haftmittels mit einer Wärmestrahlung, die durch eine Wärmestrahlungseinheit bereitgestellt wird, und
Verbinden der Abdeckung und der Karte durch Druckbeaufschlagung unter Verwendung des erwärmten Haftmittels.

Zur Vermeidung der oben erläuterten Probleme bei herkömmlichen Laminiereinheiten lehrt die vorliegende Erfindung einen Ansatz, gemäß dem das Haftmittel, mittels dem die Abdeckung an der Karte befestigt wird, durch eine direkte Beaufschlagung desselben mit einer Wärmestrahlung, beispielsweise einer IR-Strahlung erwärmt wird, indem die Wärmestrahlung auf vorbestimmte Bereiche gerichtet wird, in denen sich das Haftmittel während der Zuführung zur Andruckeinheit befindet. Gemäß Ausführungsbeispielen kann vorgesehen sein, zusätzlich das Patch-Laminat und/oder die Karte und/oder die Andruckrolle(n) mit der Wärmestrahlung zu beaufschlagen, um so die möglichen Wärmegradienten innerhalb der Anordnung in einem vorbestimmten Toleranzbereich zu halten.

Gegenüber dem herkömmlichen Ansatz der Verwendung einer Heizpatrone innerhalb der Andruckwalzen ist der erfindungsgemäße Ansatz vorteilhaft, da zum einen nur diejenigen Bereiche, die tatsächlich erwärmt werden sollen, bestrahlt werden, also insbesondere der Bereich, in dem sich das Haftmittel befindet. Der erfindungsgemäße Ansatz ist vorteilhaft, da die Wärmestrahlungsquelle, beispielsweise in Form einer IR-Strahlungslampe deutlich schneller anspricht als eine Heizpatrone, allein aufgrund der geringeren Masse und des geringeren Materials, welches die Wärmestrahlung durchdringen muss. Wird die Lampe ausgeschaltet, so endet auch die Wärmeeinstrahlung, so dass gemäß Ausführungsbeispielen eine dynamische, also auf die Gegebenheiten angepasste Regelung ermöglicht wird. Ausführungsbeispiele der Erfindung verwenden eine IR-Strahlungsquelle, die es ermöglicht die auf der Folie aufgebrachten Patch-Laminate durch die Folie hindurch zu bestrahlen, da die IR-Strahlung die Folie durchdringt und somit eine Erwärmung des Haftmittels, welches vorzugsweise auf der Vorderseite der Patch-Laminate angeordnet ist ermöglicht.

Somit beschreibt die Erfindung eine Laminiereinheit und ein Laminierverfahren, bei denen keine von innen beheizte Walze mehr zum Erwärmen des Haftmittels verwendet wird, sondern stattdessen mittels einer Lampe energiereiche Strahlung, z.B. infrarotes Licht, von außen zugeführt wird. Durch Verwendung des IR-Lichtes können handelsübliche Laminate mit Schmelzkleberauftrag verwendet werden. Ausführungsbeispiele verwenden gummierte Walzen zum An- und Gegendruck, wobei gegenüber bestehenden Lösungen die Wärme nicht von innen (Heizpatrone) nach außen übertragen werden muss, sondern von außen durch die IR-Strahlung zugeführt wird. Die Strahlungsquelle befindet sich somit außerhalb der Andruckeinheit. Hierdurch ist eine größere Lebensdauer des Silikonbezuges und auch der innen liegenden Lager gegeben. Durch den Wegfall der Heizpatrone können in der Walze größere Lagerungen eingesetzt werden. Wird nicht laminiert, so wird die im Anpressdruck regelbare Andruckwalze angehoben. Dies ist vorteilhaft beim Einsatz der erfindungsgemäßen Einrichtung in einer Personalisierungsvorrichtung für Karten, bei denen nicht alle personalisierten Karten laminiert werden müssen.

Gemäß Ausführungsbeispielen der Erfindung besteht durch die Verwendung einer IR-Lampe die Möglichkeit, die Energie gezielt an die erforderlichen Positionen und insbesondere an verschiedene Positionen zu bringen. Konnte man bisher mit der beheizten Andruckrolle nur durch Wärmeleitung von der Andruckwalze über die Laminatträgerfolie des Laminats selbst die Energie auch auf die Karte übertragen, so können nun bereits vor dem Aufwalzen des Laminats das Laminat selbst und auch die Karte vorgeheizt werden, wodurch sich eine haltbarere Verklebung von Laminat und Karte einstellt und ferner ein höherer Kartendurchsatz erzielbar ist. Bei dem Haftmittel handelt es sich um herkömmliche Haftvermittler oder Kleber, z.B. Schmelzkleber, die auf Wärme reagieren (z.B. durch Wärme aktiviert werden) und die erwünschte nichtlösbare bzw. irreversible Verbindung zwischen der Karte und dem Laminat bewirken. Die Laminate können z.B. durch eine Trägerfolie - auch als Trägersubstrat bezeichnet - getragen werden, und haften an diesem an, so dass die Laminate von der Trägerfolie abgezogen werden können.

Gegenüber herkömmlichen Ansätzen, wie sie oben beschrieben wurden, ist der erfindungsgemäße Ansatz vorteilhaft, da die erforderliche Energie sofort mit dem Einschalten der IR-Lampe zur Verfügung steht. Ferner ist die Energiequelle, nämlich die IR-Lampe, hinsichtlich ihrer Leistung regelbar und weniger träge. Ferner erfolgt eine Erwärmung durch direkte Wärmestrahlung anstelle einer Wärmeleitung. Es stellen sich in diesem Zusammenhang auch geringere Abkühlzeiten ein, so dass ein geringeres Gefährdungspotential für das Personal vorliegt, beispielsweise beim erforderlichen Wechsel der Laminatträgerfolie. Durch Verwendung entsprechend ausgebildeter IR-Lampen, Reflektoren, sogenannte Strahlungswandler, und Deflektoren kann die Energie gezielt an die zu erhitzenden Elemente zugeführt werden, beispielsweise auch an die Karte. Das IR-Licht kann durch das durchsichtige Laminat hindurch auch eine räumlich dahinter liegende Karte aufheizen. Der Einsatz von herkömmlichen Schmelzkleberlaminaten ist sichergestellt. Die Baugröße der IR-Lampen ist auch für kleine Mechanikeinheiten akzeptabel. Die Andruckwalze kann ebenfalls von außen beheizt werden.

Bevorzugte Ausführungsbeispiele der vorliegenden Erfindung werden nachfolgend unter Bezugnahme auf die beiliegenden Zeichnungen näher erläutert, in denen:
- Fig. 1: eine schematische Darstellung einer herkömmlichen Laminiereinheit zeigt:
- Fig. 2: eine schematische Darstellung einer Laminiereinheit gemäß einem Ausfüh- rungsbeispiel der Erfindung zeigt;
- Fig. 3: die in Fig. 2 gezeigte Laminiereinheit zeigt, wobei Fig. 3 zusätzlich eine Steuerung darstellt;
- Fig. 4: eine schematische Darstellung einer Laminiereinheit gemäß einem weiteren Ausführungsbeispiel der Erfindung zeigt;
- Fig. 5(A)-(F): weitere Ausführungsbeispiele zur Realisierung einer Laminiereinheit gemäß der Erfindung zeigen; und
- Fig. 6: ein Beispiel für eine Personalisierungsvorrichtung zeigt, welche die erfin- dungsgemäße Laminiereinheit aufweist.

In der nachfolgenden Beschreibung der bevorzugten Ausführungsbeispiele werden ähnliche und gleichwirkende Elemente in den Figuren mit gleichen Bezugszeichen versehen. Ferner wird darauf hingewiesen, dass in der nachfolgenden Beschreibung der Figuren Elemente, die bereits anhand der Fig. 1 beschrieben wurden, mit den gleichen Bezugszeichen versehen sind und nicht nochmals beschrieben werden. Ferner wird in der nachfolgenden Beschreibung der Begriff "Mehrzahl" verwendet, der bedeutet, dass mindestens zwei, also zwei, drei oder mehr Elemente oder Einheiten vorgesehen sind. Ferner wird darauf hingewiesen, dass die nachfolgende Beschreibung primär im Zusammenhang mit einer Vorrichtung erfolgt, wobei jedoch aus der nachfolgenden Beschreibung hervorgeht, dass die beschriebenen Aspekte ebenfalls eine Beschreibung eines entsprechenden Verfahrens betreffen, wobei ein in den Figuren dargestelltes Element einem oder mehreren Merkmalen des erfindungsgemäßen Verfahrens entspricht.

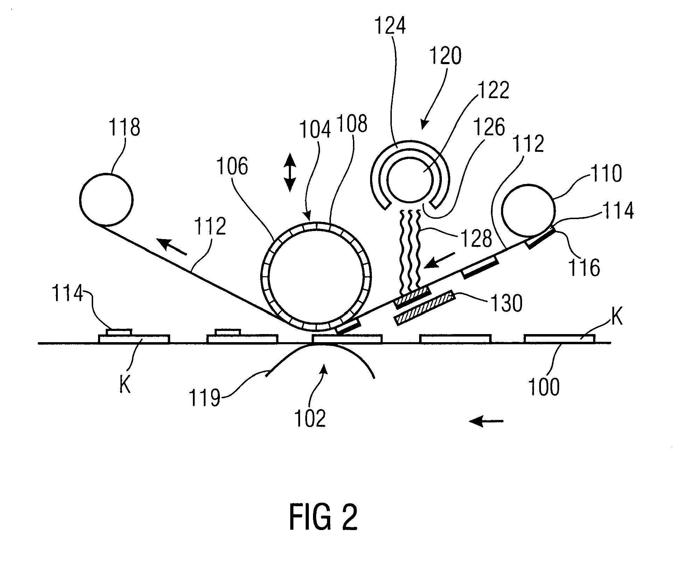

Fig. 2 zeigt eine schematische Darstellung einer Laminiereinheit gemäß einem Ausführungsbeispiel der Erfindung. Wie aus einem Vergleich der Figuren 1 und 2 zu erkennen ist, unterscheiden sich die Laminiereinheiten im Hinblick auf die Ausgestaltung der Andruckrolle 104. Bei dem in Fig. 2 gezeigten Ausführungsbeispiel ist keine Heizpatrone vorgesehen, stattdessen ist eine Wärmeerzeugungseinheit bzw. Wärmestrahlungseinheit 120 zwischen der Andruckeinheit 102 und der Laminatzuführspule 110 vorgesehen. Die Wärmestrahlungseinheit 120 umfasst eine Wärmestrahlungsquelle 122, beispielsweise eine IR-Lampe. Diese ist bei dem in Fig. 2 gezeigten Ausführungsbeispiel in einem reflektierenden Gehäuse 124 angeordnet, welches eine Öffnung 126 aufweist, durch die die von der IR-Lampe 122 abgegebene Strahlung 128 auf einen erwünschten Bereich gerichtet ist. Bei dem in Fig. 2 gezeigten Ausführungsbeispiel ist die Anordnung der Wärmestrahlungseinheit 120 derart gewählt, dass die von der Lampe 122 ausgestrahlte Wärmestrahlung 128 auf einen Bereich gerichtet ist, durch den die Trägerfolie 112 mit den darauf aufgebrachten Patch-Laminaten 114 bewegt wird. Die IR-Strahlung 128 durchdringt die Folie 112 und erwärmt das auf dem Patch-Laminat angeordnete Haftmittel 116 auf eine vorbestimmte Temperatur, so dass sichergestellt ist, dass bei einer Verbindung von Karte K und Patch-Laminat 114 durch die Andruckeinheit 102 eine ausreichend feste Verbindung zwischen diesen Elementen herbeigeführt wird.

Ferner ist bei dem in Fig. 2 gezeigten Ausführungsbeispiel ein Reflektor 130 vorgesehen, der die Folie 112 durchdringende Strahlung in Richtung des Haftmittels 116 reflektiert, wodurch die Effizienz verbessert wird. In anderen Ausführungsbeispielen kann der Reflektor - ggf. mit weiteren Reflektoren - vorgesehen sein, um die Wärmestrahlung, z.B. die IR Strahlung, zu dem erwünschten Bereich zu leiten. Zusätzliche Elemente können vorgesehen sein, um die Strahlung auf einen erwünschten Bereich zu fokussieren.

An dieser Stelle sei darauf hingewiesen, dass gemäß anderen Ausführungsbeispielen der Erfindung vorgesehen sein kann, zusätzlich zur Wärmestrahlungseinheit 120 eine Andruckrolle 104 zu verwenden, die eine Heizpatrone aufweist, um so eine Erwärmung der Heizpatrone auf eine erwünschte Temperatur sicherzustellen, um die innerhalb der Anlage zulässigen Temperaturgradienten innerhalb eines vorbestimmten Toleranzbereiches zu halten. Alternativ oder zusätzlich kann die Wärmestrahlungseinheit 120 ausgestaltet sein, um auch die Andruckrolle 104 mit Wärmestrahlung zu beaufschlagen, wie dies später noch beschrieben wird.

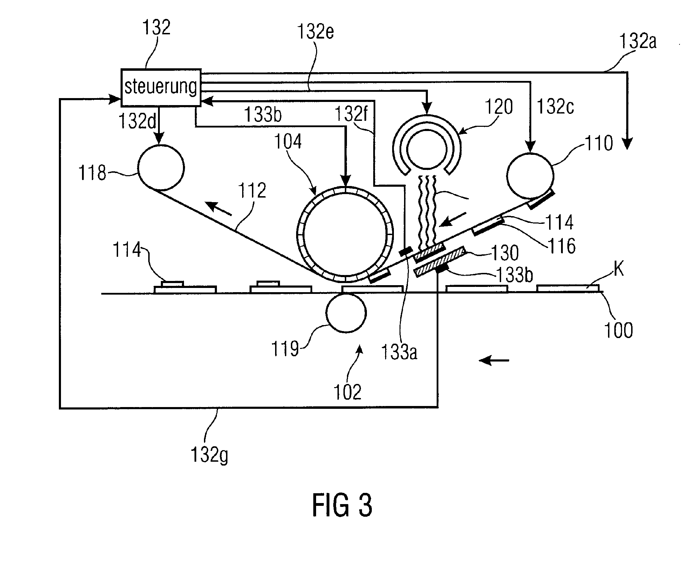

Fig. 3 zeigt das anhand der Fig. 2 gezeigte Ausführungsbeispiel einer Laminiereinheit, wobei ferner, schematisch, eine Steuerung 132 gezeigt ist, die wirksam mit dem Transport 100 verbunden ist, wie dies schematisch durch den Pfeil 132a angedeutet ist. Ferner ist die Steuerung 132 wirksam mit der Andruckeinheit 102 verbunden (siehe Pfeil 132b), um deren Drehgeschwindigkeit, Anpressdruck, vertikale Position etc. zu steuern. Die Steuerung 132 ist über die Leitung 132c mit der Laminatzuführspule 110 verbunden und über die Leitung 132d mit der Leergutspule 118. Ferner ist die Steuerung 132 über die Leitung 132e mit der Wärmestrahlungseinheit 120 verbunden, wobei gemäß Ausführungsbeispielen die Steuerung 132 ein Ansteuern der Lampe der Wärmestrahlungseinheit 120 bewirkt, um dann, wenn im Bereich gegenüber dem Reflektor 130 ein Patch-Laminat vorliegt, dessen Erwärmung zu bewirken, sofern gleichzeitig eine Karte K für eine Laminierung bereitsteht. Die Steuerung 132 ist ferner vorgesehen, um den Betriebsablauf der Laminiereinheit zu steuern, insbesondere um die Lampe 122 auf die oben beschriebene Art für ein Erwärmen des Haftmittels 116 zu steuern und ferner die verschiedenen Antriebe zu steuern, um eine synchrone Bewegung von Karte und Patch-Laminat 114 sicherzustellen. Zu diesem Zweck empfängt die Steuerung 132 entsprechende Sensorsignale von den in Fig. 3 dargestellten Sensoren 133a und 133b. Ferner können Positionssensoren vorgesehen sein, um die Positionen der verschiedenen Elemente bezüglich der Wärmequelle 120 und der Andruckeinheit 102 wiederzugeben. Die in Fig. 3 gezeigten Sensoren 133a, 133b sind Temperatursensoren. Ein erster Temperatursensor 133a ist der Wärmequelle 120 und der Andruckeinheit 102 angeordnet, um eine Temperatur zu erfassen, die über die Leitung 132f an die Steuerung 132 gegeben wird, die ihrerseits die Wärmequelle 120 ansteuert, um in dem durch den ersten Temperatursensor 133a überwachten Bereich eine erwünschte Temperatur einzustellen, um das Haftmittel 116 der Abdeckung auf die für die Verbindung mit der Karte K erforderliche Temperatur zu bringen. Ein zweiter Temperatursensor 133b ist an dem Reflektor 130 vorgesehen und über die Leitung 132g mit der Steuerung 132 verbunden. Auf der zweite Temperatursensor 133b dient zur Ansteuerung der Wärmequelle 120, um die erwünschte Temperatur in dem vorbestimmten Bereich zu erhalten. Alternativ oder zusätzlich zu den Sensoren kann auf die Leistungsaufnahme (z.B. Stormverbrauch) der Wärmequelle 120 erfasst werden und ausgehend hiervon die abgestrahlte Wärmemenge und die damit innerhalb der erwünschten Bereichs erreichbare Temperatur bestimmt werden, so dass in einem solchen Fall die Temperatur (ggf. zusätzlich) über die Leistungsaufnahme der Wärmequelle 120 gesteuert wird.

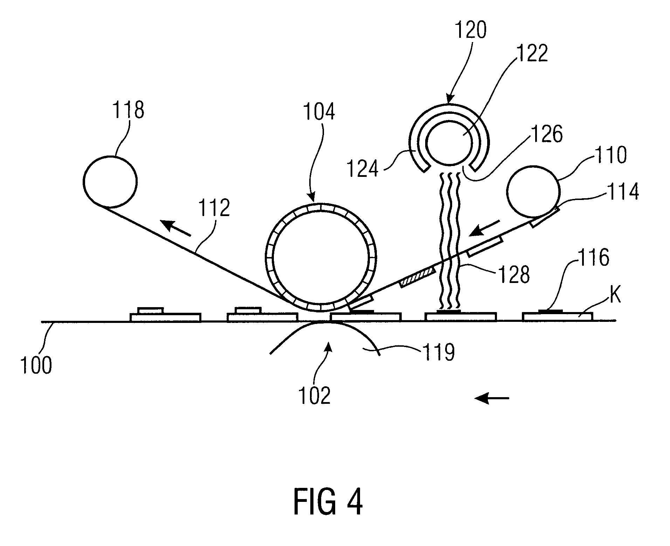

Die Fig. 4 zeigt eine schematische Darstellung einer Laminiereinheit gemäß einem weiteren Ausführungsbeispiel der Erfindung. Bei den anhand der Fig. 2 und 3 beschriebenen Ausführungsbeispielen wurde ein Ansatz beschieben, bei dem das Haftmittel 116 auf dem Patch-Laminat angeordnet ist. Die vorliegende Erfindung ist jedoch nicht auf solche Ausgestaltungen beschränkt, sondern vielmehr kann das Haftmittel auch getrennt von Karte und Patch-Laminat bereitgestellt werden oder, wie anhand der Fig. 4 beschrieben wird, die Karte kann bereits mit dem Haftmittel 116 beschichtet sein, das entweder auf der gesamten Oberfläche oder auf einem Teil der Oberfläche der Karte angeordnet ist, abhängig davon, wie groß die aufzubringenden Patch-Laminate sind. Fig. 4 zeigt die schematische Darstellung der Laminiereinheit gemäß diesem Ausfilhrungsbeispiel, wobei anders als in der Fig. 2 und anders als in der Fig. 3, die Wärmestrahlungseinheit 120 derart ausgestaltet ist, dass die von der Lampe 122 erzeugte Strahlung 128 auf einen Abschnitt gerichtet ist, den eine Karte K durchläuft, wobei die Karte K an einem vorbestimmten Abschnitt ihrer Oberfläche mit dem Haftmittel 116 versehen ist. Wie ferner zu erkennen ist, umfasst die Trägerfolie 112 in diesem Fall lediglich die Patch-Laminate 114 ohne Haftmittel 116. Das Haftmittel 116 können beispielsweise durch eine vorgeschaltete Dispenser-Vorrichtung an entsprechenden Stellen der Oberfläche der Karte K aufgebracht werden, sofern die Karte zum Laminieren vorgesehen ist. Die Haftmittel 116 können auch durch andere, im Stand der Technik bekannte Mittel auf die Karte K aufgebracht werden.

Bei den anhand der Fig. 2 bis 4 beschriebenen Ausführungsbeispielen umfasst die Andruckeinheit 102 zwei gegenüberliegende Rollen oder Walzen 104 und 119. Die Erfindung ist nicht auf die Ausgestaltung der Andruckeinheit 102 unter Verwendung von Walzen beschränkt. Vielmehr können statt der Walzen auch gegenüberliegende Riemen eingesetzt werden oder alternativ auch Kombinationen aus Riemen und Walzen/Rollen. Ferner kann es bei Ausführungsbeispielen auch ausreichend sein, lediglich das obere Trum der Andruckeinheit 102 vorzusehen, und im Bereich des Transports 100 unterhalb der Andruckrolle 104 eine feste Oberfläche vorzusehen, gegen die die Rolle 104 drücken kann, um den erforderlichen Anpressdruck zum Verbinden von Patch-Laminat und Karte K herbeizuführen. Alternative können auch Stempel oder Druckplatten als Andruckelemente verwendet werden, was ggf. ein Anhalten von Abdeckung und Karte beim Verbinden derselben erforderlich macht.

Ferner können auch mehrere Wärmestrahlungseinheiten vorgesehen sein, die während der Zuführung der Elemente zu der Andruckeinheit eine kontinuierliche Wärmebeaufschlagung ermöglichen, um die Elemente innerhalb eines vorbestimmten Temperaturbereichs zu halten. Die Wärmestrahlungseinheiten können z.B. zwischen der Spule 110 und der Andruckeinheit 102 gestaffelt angeordnet sein. Alternativ kann vorgesehen sein, das die Wärmestrahlungseinheiten mit zunehmender Nähe zu dem Andruckelement mehr Wärmestrahlung bereitstellen, um die aufzuheizenden Elemente ausgehend von einer Anfangstemperatur auf die erforderliche Temperatur bei der Verbindung zu heizen, wobei diese Temperaturerhöhung kontinuierlich (linear oder exponentiell) oder schrittweise erfolgen kann.

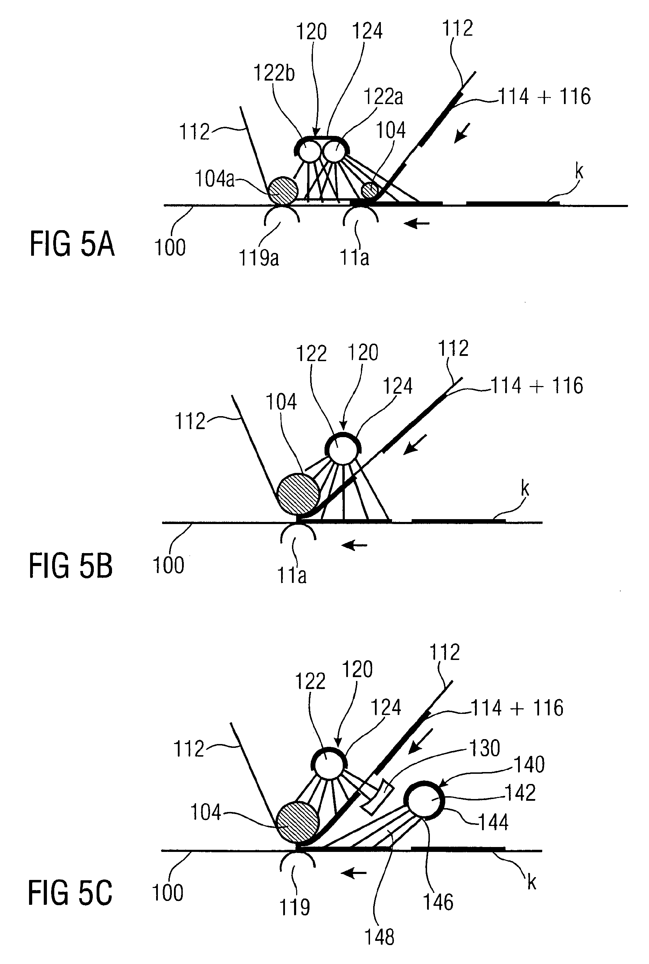

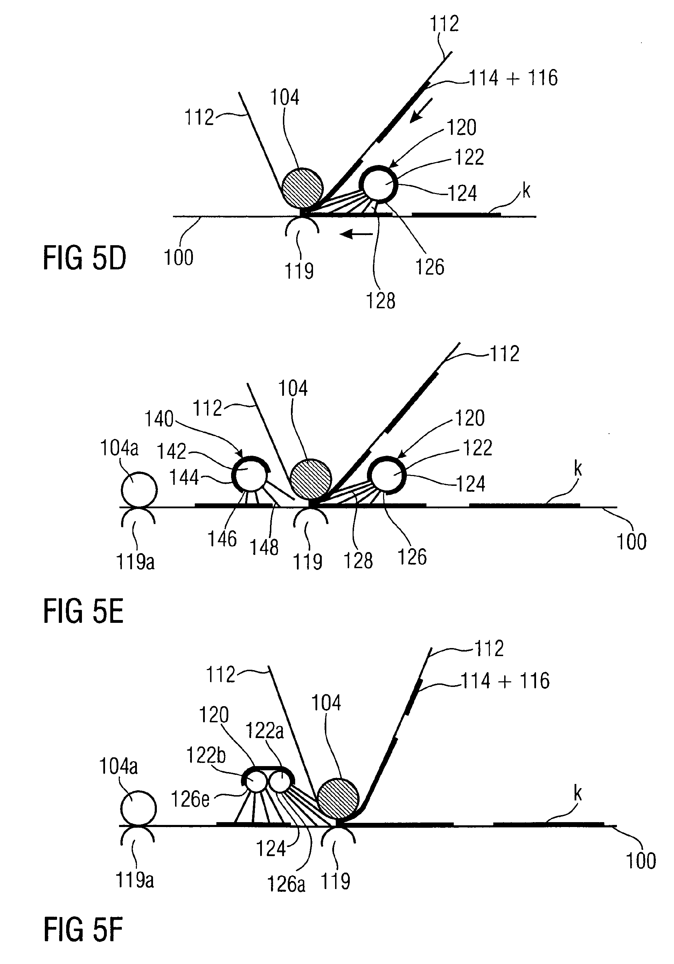

Anhand der Fig. 5 werden nachfolgend verschiedene Ausführungsbeispiele zur Realisierung einer Laminiereinheit gemäß der Erfindung erläutert.

Fig. 5(A) zeigt ein Ausführungsbeispiel, bei dem die Wärmestrahlungseinheit 120 zwei Lampen 122a und 122b umfasst, die in Förderrichtung hinter der Andruckrolle 104 angeordnet sind. Ferner ist eine zweite Andruckrolle 104a mit einer entsprechenden Gegenrolle 119a vorgesehen. Die erste IR-Lampe 122a ist bei diesem Ausführungsbeispiel vorgesehen, um die der ersten Andruckrolle 104 zugeführten Patch-Laminate mit darauf angeordnetem Haftmittel zu bestrahlen, wobei, wie es zu erkennen ist, die Strahlung ferner auf die Andruckrolle 104 und auf die zugeführte Karte K trifft, so dass neben der Erwärmung des Haftmittels auf die erforderliche Verbindungstemperatur auch alle anderen Elemente, die miteinander in Kontakt sind, erwärmt werden, so dass ein Temperaturgradient zwischen den in Kontakt tretenden Elementen innerhalb eines vorbestimmten Toleranzbereiches gehalten werden kann. Ferner bewirkt die erste Lampe 122a eine Erwärmung des Elements, das durch die Verbindung von Patch-Laminat und Karte K hervorgeht. Zusätzlich ist in Fig. 5(A) die weitere Andruckrolle 104a mit entsprechender Gegenrolle 119a vorgesehen. Die zweite IR-Lampe, die zusammen mit der ersten IR-Lampe 122a von einem gemeinsamen Reflektor 122 umgeben ist, gibt durch die Öffnung im Reflektor 124 Wärmestrahlung an die laminierte Karte sowie an die zweite Rolle 104a ab. Die Walzen 104 und 104a werden somit durch den Zwillingsstrahler oder durch zwei Einzelstrahler beheizt, wobei ferner die Karte und das Laminat (Patch) mittels der IR-Strahlen des ersten Strahlers 122a auf eine bestimmte Temperatur gebracht werden, also vorgeheizt werden. Wie zu erkennen ist, sind die Strahler aufgrund der Öffnung im Reflektor 124 ausgestaltet, so dass die IR-Strahlen nur die erwünschten Bereiche aufwärmen.

Fig. 5(B) zeigt eine Ausgestaltung, die ähnlich zu den Ausführungsbeispielen ist, die anhand der Fig. 2 und 3 beschrieben wurden. Die Lampe 122 strahlt IR-Wärmestrahlung durch die Öffnung im Reflektor 124 ab, wobei jedoch kein Reflektor 130, wie in den Fig. 2 und 3, vorgesehen ist. Hierdurch wird erreicht, dass die Wärmestrahlung zum einen das Haftmittel 116 vorheizt, aber auch die Karte K, das Patch-Laminat 114 und die Andruckrolle 104 erreicht und damit aufwärmt. Bei dieser Ausführungsform werden somit die Walzen 104 durch den Einzelstrahler 122 beheizt, ebenso wie die Karte und das Laminat, die ebenso wie das Haftmittel auf eine vorbestimmte Temperatur gebracht werden. Auch hier ist der Strahler durch die Öffnung in dem Reflektor so ausgestaltet, dass nur ein erwünschter Bereich durch die IR-Strahlen erwärmt wird.

Fig. 5(C) zeigt eine Ausgestaltung mit getrennten Wärmestrahlungseinheiten. Genauer gesagt ist eine erste Wärmestrahlungseinheit 120 vorgesehen, die eine Lampe 122 aufweist, die IR-Strahlung durch die Öffnung im Reflektor 124 abgibt. Die Ausgestaltung der Öffnung im Reflektor 124 ist derart, dass die IR-Strahlung zum einen die Andruckrolle 104 erreicht und zum anderen das Laminat 114 und das Haftmittel 116, so dass selbiges auf die erforderliche Temperatur für den Laminierungsprozess aufgeheizt wird. Ferner ist der Reflektor 130 vorgesehen, der zum einen Energie von der Lampe 122 reflektiert und gleichzeitig von der Karte K abhält. Die zweite Wärmestrahlungseinheit 140 ist ähnlich aufgebaut wie die erste Wärmestrahlungseinheit 120 und umfasst ebenfalls eine IR-Lampe 142, die teilweise von einem Reflektor 144 umgeben ist, der eine Öffnung 146 aufweist, durch die IR-Strahlung 148 auftreten kann. Die Öffnung 146 ist derart ausgestaltet, dass die durch die IR-Lampe 142 erzeugte IR-Strahlung 148 auf die Karte K vor dem Eintritt in die Andruckeinheit 102 auftrifft. Bei diesem Ausführungsbeispiel wird die Andruckrolle 104 oder Heizwalze durch den Einzelstrahler 122 beheizt, zusammen mit dem Laminat und dem Haftmittel, welche über die IR-Strahlung auf die erforderliche Temperatur vorgeheizt werden. Zusätzlich ist der Strahlungswandler 130 auf der Laminatseite (Patch-Seite) der Folie 112 angeordnet, der die Strahlen, die das Laminat nicht erwärmen, reflektiert und somit einen besseren Wirkungsgrad ermöglicht. Beide Strahler 120 und 140 sind so ausgeführt, dass die IR-Strahlen nur den erwünschten Bereich aufwärmen, wobei beide Strahler unterschiedlich angesteuert werden können, beispielsweise durch unterschiedliche Leistungen, um so die entsprechenden Bereiche auf unterschiedliche Temperaturen, sofern dies erwünscht ist, vorzuheizen.

Fig. 5(D) zeigt eine Anordnung, bei der die Wärmestrahlungseinheit 120 zwischen der Folie 112 und dem Transport 100 für die Karten K angeordnet ist. Wie zu erkennen ist, ist die Wärmestrahlungseinheit 120 derart ausgestaltet, dass die Öffnung 126 im Reflektor 124 einen Austritt der Wärmestrahlung 128 der IR-Lampe 122 derart ermöglicht, dass sowohl das Haftmittel auf dem Patch-Laminat 114 als auch die Karte K und die Andruckrolle 104 mit IR-Strahlung beaufschlagt werden. Wie zu erkennen ist, erreicht nur ein kleiner Teil und ggf. auch gar kein Teil der Strahlung der Lampe 122 die Andruckrolle 104, so dass in diesem Fall vorgesehen sein kann, diese mit einer Heizpatrone auszugestalten, um diese auf einer erforderliche Temperatur zu halten, um die Temperaturgradienten der in Kontakt tretenden Elemente innerhalb des Toleranzbereiches zu halten. Die Strahlen der IR-Lampe 122 sind vorgesehen, um das Haftmittel, die Karte und das Laminat (ggf. auch die Heizwalze) auf die erwünschte Temperatur zu bringen, wobei wiederum nur ein vorbestimmter Bereich mit den IR-Strahlen bestrahlt wird.

Fig. 5(E) zeigt einen Ansatz, bei dem ausgehend von der Fig. 5(D) stromabwärts von der Andruckrolle 104 eine zweite Wärmeerzeugungseinrichtung 140 ähnlich derjenigen, die anhand der Fig. 5(C) beschrieben wurde, vorgesehen ist. Ferner ist entsprechend dem Ausführungsbeispiel gemäß Fig. 5(A) ein weiteres Rollen- oder Walzenpaar 104a und 119a vorgesehen, welches die laminierte Karte K nochmals mit Druck beaufschlagt, um das Laminat endgültig auf der Karte aufzubringen. Die zweite Wärmeerzeugungseinrichtung 140 ist daher vorgesehen, um die laminierte Karte K, die die Rollen 104 und 119 verlässt, mit Wärme zu beaufschlagen, um den anschließenden Andruckprozess zwischen den Rollen 104a und 91 a zu unterstützen.

Fig. 5 (F) zeigt eine Ausgestaltung, bei der eine Wärmestrahlungseinheit 120 vorgesehen ist, wie sie anhand der Fig. 5 (A) erläutert wurde. Die Wärmestrahlungseinheit 120 ist in Förderrichtung nach der Andruckrolle 104 vorgesehen, wobei die erste Lampe 122a Strahlung 128 durch die Ausgestaltung der Öffnung 126 in dem Reflektor 124 an die Stelle abgibt, an der Laminat und Karte zusammenkommen. Dies bewirkt eine entsprechende Erwärmung des Haftmittels 116 auf die erforderliche Laminierungstemperatur. Ferner wird durch die Ausgestaltungsreflektor betreffende Lampe 122b (siehe die Öffnung 126d) die laminierte Karte K erwärmt, und einem weiteren Andruckrollenpaar 104a, 119a zugeführt, um den Laminierungsprozess abzuschließen.

Hinsichtlich der oben beschriebenen Ausführungsbeispiele wird darauf hingewiesen, dass die vorliegende Erfindung nicht auf die Verwendung einer IR-Lampe als Wärmestrahlungsquelle besteht. Vielmehr können jegliche Formen von Wärmestrahlungsquellen zum Einsatz kommen, beispielsweise elektrische Heizelemente (Heizspulen, Heizplatten), Heizstrahler mit/ohne Gebläse.

Wie oben bereits erwähnt, ist die erfindungsgemäße Vorgehensweise insbesondere im Zusammenhang mit deren Einsatz in Personalisierungsvorrichtungen vorteilhaft, da aufgrund der Anordnung der Strahlungsquellen in Form von IR-Lampen oder ähnlichen Lampen die Baugröße gegenüber einer herkömmlichen Laminiereinheit nicht verändert wird, diese Laminiereinheiten also ohne Probleme in Personalisierungseinheiten oder Personalisierungsgeräte eingebaut werden können.

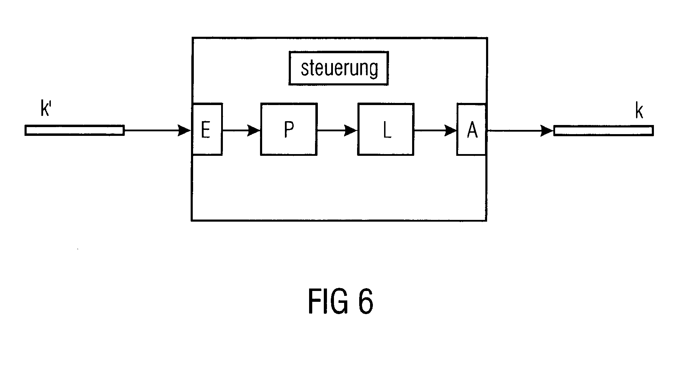

Fig. 6 zeigt einige schematische Darstellungen einer Personalisierungseinheit in Form eines Blockdiagramms, wobei die Personalisierungsvorrichtung an einem Eingang A nichtpersonalisierte Karten K' empfängt. Diese Karten werden dann einer Personalisierungsvorrichtung P übergeben, in der, abhängig vom Kartentyp, beispielsweise Daten in Magnetstreifen oder Chip-Elementen abgelegt werden. Ferner können die eingangs erwähnten Personalisierungsschritte bezüglich der Karte K' durchgeführt werden, beispielsweise durch Bedrucken derselben mit einem Logo oder mit einem Foto und ferner können Daten eingestanzt werden. Abhängig davon, ob eine Laminierung der so personalisierten Kunststoffkarte erforderlich ist oder nicht, wird die Personalisierungsvorrichtung gemäß Fig. 6 die Karte an die Laminierungseinheit L weitergeben. Ist eine Laminierung erforderlich, so wird über die Steuerung die Laminiereinheit angesteuert, die erfindungsgemäß arbeitet, um ein Laminat auf einen Teil der Oberfläche oder auf die gesamte Oberfläche der personalisierten Karte auf die oben beschriebene Art und Weise aufzubringen. Die so fertig gestellte Karte wird dann über den Ausgang A ausgegeben. Die Steuerung in Fig. 6 kann vorgesehen sein, um auch gleichzeitig die oben beschriebene Steuerung der Laminiereinheit darzustellen. Für den Fall, dass die personalisierte Karte, die von der Personalisierungseinheit P ausgegeben wird, keine Laminierung erfordert, wird die Laminiereinheit über die Steuerung entsprechend informiert, und eine Aktivierung der Wärmestrahlungseinheiten unterbleibt. Ebenso wird die Andruckeinheit angesteuert, um die Andruckelemente voneinander zu trennen, beispielsweise durch ein vertikales Verfahren der Andruckrolle in eine Richtung weg von der Transporteinheit, so dass die Karte die Laminiereinheit ohne Wechselwirkung mit derselben durchläuft. Ebenso wird in einem solchen Fall eine Aktivierung der Transporte für die Zuführung der Laminatfolie unterbleiben.

## Patentansprüche

1. Vorrichtung zum Aufbringen einer Abdeckung (114) auf zumindest einem Abschnitt einer Oberfläche einer Karte (K) unter Verwendung eines Haftmittels (116), mit:
einer Wärmestrahlungseinheit (120, 140), die konfiguriert ist, um das Haftmittel (116) zum Erwärmen desselben mit einer Wärmestrahlung (128, 148) zu beaufschlagen; und
einer Andruckeinheit (102), die konfiguriert ist, um die Abdeckung (114) und die Karte (K) durch Druckbeaufschlagung und unter Verwendung des erwärmten Haftmittels (116) miteinander zu verbinden,
wobei die Wärmestrahlungseinheit (120, 140) außerhalb der Andruckeinheit (102) angeordnet ist.

2. Vorrichtung nach Anspruch 1, bei der die Wärmestrahlungseinheit (120, 140) konfiguriert ist, um ferner die Abdeckung (114) und/oder zumindest einen Abschnitt der Karte (K) und/oder ein Druckbeaufschlagungselement (104) der Andruckeinheit (102) mit einer Wärmestrahlung zu beaufschlagen.

3. Vorrichtung nach Anspruch 1 oder 2, bei der die Wärmestrahlungseinheit (120) eine Mehrzahl von Wärmestrahlungsquellen (122a, 122b) umfasst.

4. Vorrichtung nach Anspruch 3, bei der zumindest eine erste Wärmestrahlungsquelle (122a) vorgesehen ist, um das Haftmittel (116) oder das Haftmittel (116) sowie die Abdeckung (114) und/oder die Karte (K) mit einer Wärmestrahlung zu beaufschlagen, und bei der zumindest eine zweite Wärmestrahlungsquelle (122b) vorgesehen ist, um ein Druckbeaufschlagungselement (104) der Andruckeinheit (102) mit einer Wärmestrahlung zu beaufschlagen.

5. Vorrichtung nach einem der Ansprüche 1 bis 4, mit
zumindest einer weiteren Andruckeinheit, die in Förderrichtung der Karte (K) nachfolgend zu der ersten Andruckeinheit (102) angeordnet ist,
wobei die Wärmestrahlungseinheit (120) ferner konfiguriert ist, um ein durch die Andruckeinheit (102) erzeugtes Element mit einer Wärmestrahlung zu beaufschlagen.

6. Vorrichtung nach einem der Ansprüche 1 bis 5, bei der die Wärmestrahlungseinheit (120, 140) konfiguriert ist, um die bereitgestellte Wärmestrahlung auf einen erwünschten Bereich zu richten.

7. Vorrichtung nach einem der Ansprüche 1 bis 6, bei der das Haftmittel (116) auf der Abdeckung (114) oder auf der Karte (K) angeordnet ist, wobei die Abdeckung (114) auf einem Trägersubstrat (112) angeordnet ist.

8. Vorrichtung nach einem der Ansprüche 1 bis 7, mit:
einer Einheit (110) zum Zuführen der Abdeckung (114) zu der Andruckeinheit (102),
wobei die Andruckeinheit (102) ein Druckbeaufschlagungselement (104) und ein Gegenelement (119) umfasst, zwischen denen die Karte (K) und die Abdeckung (114) hindurch bewegt werden, und
wobei die Wärmestrahlungseinheit (120, 140) konfiguriert ist, um das Haftmittel (116) in einem Bereich zwischen der Zuführeinheit (110) und der Andruckeinheit (102) und/oder an dem Druckbeaufschlagungselement (104) mit der Wärmestrahlung zu beaufschlagen.

9. Vorrichtung nach Anspruch 8, bei der das Druckbeaufschlagungselement (104) und das Gegenelement (119) zumindest ein Walzenpaar oder zumindest ein Riemenpaar umfassen.

10. Vorrichtung nach einem der Ansprüche 1 bis 9, bei der die Wärmestrahlungseinheit (120, 140) zumindest eine IR-Strahlungsquelle (122, 142) umfasst.

11. Verfahren zum Aufbringen einer Abdeckung (114) auf zumindest einem Abschnitt einer Oberfläche einer Karte (K) unter Verwendung eines Haftmittels (116), mit folgenden Schritten:
Beaufschlagen des Haftmittels (116) mit einer Wärmestrahlung, die durch eine Wärmestrahlungseinheit (120, 140) bereitgestellt wird, und
Verbinden der Abdeckung (114) und der Karte (K) durch Druckbeaufschlagung unter Verwendung des erwärmten Haftmittels.

12. Verfahren nach Anspruch 11, bei dem das Beaufschlagen des Haftmittels (116) mit einer Wärmestrahlung das Bereitstellen zumindest einer Wärmestrahlungsquelle (122, 142) und das Richten der von der Wärmestrahlungsquelle (122, 142) abgegebenen Wärmestrahlung auf das Haftmittel (116) umfasst.

13. Verfahren nach Anspruch 11 oder Anspruch 12, mit folgendem Schritt:
Ansteuern der Wärmestrahlungseinheit (120, 140) derart, dass eine Temperatur in einem Bereich, in dem das Haftmittel (116) erwärmt wird, innerhalb eines vorbestimmten Temperaturbereichs liegt.

14. Verfahren nach einem der Ansprüche 11 bis 13, bei dem das Haftmittel (116) auf der Abdeckung (114) oder auf der Karte (K) angeordnet ist, wobei die Wärmestrahlungsquelle (122, 142) derart gesteuert wird, dass eine Wärmestrahlung auf einen vorbestimmten Bereich gerichtet wird, wenn ein Haftmittel (116) in dem vorbestimmten Bereich ist.

15. Vorrichtung zum Personalisieren einer Karte, mit:
einer Vorrichtung zum Aufbringen einer Abdeckung (114) auf zumindest einem Abschnitt auf der Oberfläche der Karte (K) unter Verwendung eines Haftmittels (116) gemäß einem der Ansprüche 1 bis 10.
